# EUROPÄISCHE PATENTSCHRIFT

(11) **EP 0 381 134 B1**
(45) Veröffentlichungstag und Bekanntmachung des Hinweises auf die Patenterteilung: **02.06.1993**
(21) Anmeldenummer: 90101782.2
(22) Anmeldetag: 30.01.1990
(51) Int. Cl.: B01D 61/42, D01F 13/00

(54) **Verfahren zur Entsalzung von lösemittelhaltigen Elektrolytlösungen durch Elektrodialyse**
Electrodialytic desalination process of electrolyte solutions having solvents
Procédé de déminéralisation de solutions d'électrolytes contenant de solvants au moyen d'électrodialyse

(30) Priorität: 02.02.1989 DE 3903024
(43) Veröffentlichungstag der Anmeldung: 08.08.1990
(73) Patentinhaber: HOECHST AKTIENGESELLSCHAFT, 65926 Frankfurt am Main (DE)
(72) Erfinder: Schneider, Michael, Dr., D-6103 Griesheim (DE); Miess, Georg-Emerich Dr., D-6240 Königstein/Taunus (DE)

(56) Entgegenhaltungen:
- EP-A- 0 096 239
- EP-A- 0 124 087
- EP-A- 0 186 836

## Beschreibung

Die vorliegende Erfindung betrifft ein Verfahren zum Entsalzen von lösemittelhaltigen Elektrolytlösungen, d.h. von metallsalzhaltigen Mischungen aus Wasser und wasserlöslichen, hochaktiven organischen Lösemitteln durch Elektrodialyse. Das Verfahren ist besonders geeignet zur Entsalzung von Spinnfällbädern, wie sie bei der Herstellung von Synthesefasern durch Naßspinnprozesse anfallen.

Bei zahlreichen technischen Prozessen fallen Mischungen von Wasser mit hochaktiven organischen Lösemitteln an, die zusätzlich Metallsalze gelöst enthalten. Zu der aus ökonomischen und ökologischen Gründen erforderlichen Rückgewinnung der organischen Lösemittel ist es erforderlich, solche Mischungen aufzuarbeiten, d.h. in ihre Bestandteile zu zerlegen. In der Regel schließt diese Aufarbeitung eine Destillation ein, bei der entweder das Wasser oder aber das organische Lösungsmittel zunächst abdestilliert wird und ein Destillationsrückstand bleibt, der die gelösten Salze enthält. Ein in großem Umfang genutzter technischer Prozeß, bei dem derartige lösemittelhaltigen Elektrolytlösungen anfallen, ist die Herstellung aliphatischer/aromatischer Polyamid- und Polyimidfasern. Hierbei fallen je nach verwendetem Lösemittel für das Polymere Spinnfällbäder an, die Tetramethylharnstoff, Dimethylacetamid oder N-Methylpyrrolidon in hohen Konzentrationen von bis zu 80 % enthalten können. Weiterhin sind in der Regel in den Spinnfällbädern je nach verwendeter Base die Neutralisationsprodukte Natriumacetat, Natriumchlorid, Lithiumchlorid oder Calciumchlorid in Konzentrationen bis zu ca. 5 % vorhanden.

Als Verfahren zur Abtrennung und Rückgewinnung der Lösemittel werden z.B. für N-Methylpyrrolidon die Destillation (vgl. z.B. HU-B- 29 667), eventuell mit zusätzlicher Inertgas-Strippung zum Austreiben des Wassers (vgl. US-A- 4 057 491), die reine Inertgas-Strippung (vgl. DE-A- 27 09 679) sowie Extraktionsverfahren (vgl. z.B. JP-B- 49/48432 oder US-A- 4 316 846) beschrieben. Bei niedrigen Wassergehalten werden bevorzugt Destillations- und Strippverfahren, bei höheren Extraktionsverfahren angewandt.

Während durch Extraktion eine N-Methylpyrrolidon-Abreicherung der wäßrigen Phase auf <0,1 % möglich ist, verbleibt bei destillativer Wasserabtrennung ein N-Methylpyrrolidon und Salze enthaltender Destillationssumpf, aus welchem anschließend noch das Lösemittel selbst ausgetrieben werden muß. Dabei ist zur Abtreibung der Lösemittelreste aus dem Salz-Sumpf eine hohe Temperatur (Siedepunkt von N-Methylpyrrolidon beträgt 202°C) nötig, die mit einer teilweisen Zersetzung dieses Lösungsmittels einhergeht, oder es muß bei Unterdruck gearbeitet werden.

Zur Entsalzung wäßriger Lösungen existiert mit der Elektrodialyse ein Prozeß, mit dem man gezielt ionische Bestandteile aus wäßrigen Mischungen entfernen kann. Bei der Elektrodialyse wird eine Apparatur eingesetzt, die eine positive (Anode) und eine negative (Kathode) großflächige Elektrode aufweist. Der Raum zwischen den Elektroden ist durch eine Vielzahl von abwechselnd angeordneten Kation- und Anion-Austauschermembranen in eine Vielzahl schmaler, durch die Membranen voneinander getrennter Kammern aufgeteilt. Die Gesamtheit der Membranen, der dazu gehörenden Rahmen und Dichtungselemente sowie der Zu- und Ableitungen, wird auch als Stapel oder Stack bezeichnet. Kammern, die kathodenseitig eine Anionaustauschermembran und anodenseitig eine Kationaustauschermembran haben, stellen die sogenannten Konzentratkammern dar. Kammern, die anodenseitig die Anionaustauschermembran und kathodenseitig die Kationaustauschermembran haben, bilden die sogenannten Diluatkammern. Die Diluatkammern werden zunächst mit der zu entsalzenden Rohlösung gefüllt, die Konzentratkammern mit einem wäßrigen Elektrolyt und die Kammern, in denen sich die Elektroden befinden und gegebenenfalls noch die unmittelbar an diese angrenzenden Nachbarkammern, werden mit einer Elektrodenspüllösung, die bei herkömmlichem Verfahren in der Regel aus Natriumsulfatlösung besteht, beaufschlagt. Unter dem Einfluß der an die Elektroden angelegten Spannung wandern die Ionen durch die für sie durchlässige Membran aus der Diluatkammer hinaus in die Konzentratkammer. Durch die folgende, für die entsprechende Ionensorte undurchlässige Membran, ist eine Weiterwanderung nicht möglich und das Ion verbleibt in der Konzentratkammer. Die Flüssigkeiten in den Diluat-, Konzentrat- und Elektrodenkammern werden in getrennten Kreisläufen umgepumpt, gegebenenfalls unter Einschaltung von Reservoiren.

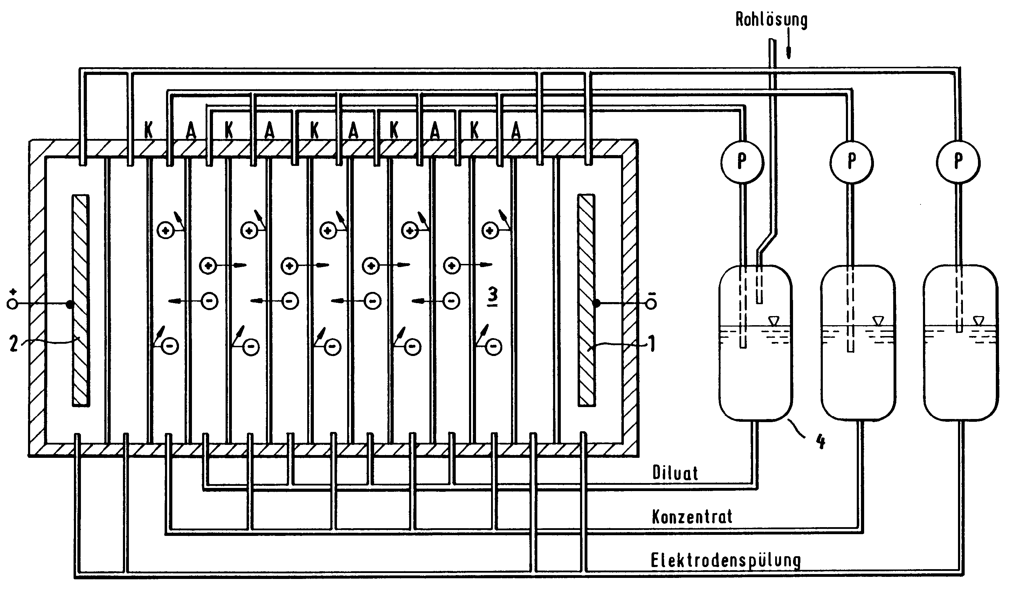

Die Figur zeigt schematisch ein Beispiel für den Aufbau einer Elektrodialyse-Einrichtung mit den Elektroden Kathode (1) und Anode (2), den Kationaustauschermembranen (K), den Anionaustauschermembranen (A) sowie den zwischen den Membranen gebildeten Elektrodialysekammern (3). Pfeile, die sich durch eine Membran erstrecken, zeigen an, daß das mit dem Pfeil versehene Ion die Membran passiert, abgeknickte Pfeile zeigen, daß das entsprechende Ion die Membran nicht passieren kann. Die Figur zeigt ferner die Zuführungen der Rohlösung, die Kreisläufe von Diluat, Konzentrat und der Elektroden-Spüllösung mit den Pumpen P und den entsprechenden Reservoiren (4).

Nach Beginn der Elektrodialyse werden die Lösungen der Konzentrat-Kammern und der Diluat-Kammern in getrennten Kreisläufen geführt, bis sich in den Diluatkammern die gewünschte Abreicherung des Elektrolytgehaltes ergeben hat. Der mit dem Ionentransport verbundene Stromfluß führt an den Elektroden zu Elektrolysereaktionen. Durch den unabhängigen dritten Kreislauf mit einer geeigneten Elektrodenspüllösung lassen sich unerwünschte Reaktionen vermeiden und es wird nur Wasser elektrolysiert.

Dieser Elektrodialyseprozeß wird im großen Stil seit langem vor allem in Japan zur Brack- und Meerwasserentsalzung (JP-B- 70 79 992) verwendet. Es lassen sich jedoch auch andere Lösungen, wie z.B. Zuckersirup oder Galvanisierbäder mittels Elektrodialyse von Salzen befreien (GB-A- 71 11 211).
Gemeinsam ist allen bisher bekannten Verfahren, daß nur wäßrige Lösungen, d.h. Lösungen, die frei sind von aggressiven organischen Lösemitteln, entsalzt worden sind.

Das Verfahren der Elektrodialyse wurde im Lauf der letzten Jahre durch verschiedene konstruktive Verbesserungen des Zellaufbaus sowie insbesondere durch Entwicklung des Elektrodialyse-Reversal-Betriebs (periodische Pol- und Strömungsumkehr) verbessert. Eine umfangreiche Zusammenstellung einschlägiger Patente und publizierter Patentanmeldungen für den Zeitraum von 1972 bis 1985 wurde vom Science Relation Service (SRS) als Projekt 076 mit Abschlußdatum vom Oktober 1985 fertiggestellt.

Aus der US-A- 4,802,965 ist die Aufarbeitung wässriger und salzhaltiges Lösungen von organischen Verbindungen mit Hilfe des Elektrodialyse bekannt. Weder in der US-A- 4,802,965 noch in den zahlreichen einschlägigen Druckschriften finden sich Hinweise, daß auch metallsalzhaltige Mischungen aus Wasser und wasserlöslichen, hochaktiven, zur Herstellung aliphatischer/aromatischer Polyamid - und Polyimidfasern geeigneten organischen Lösemitteln entsalzt werden können. Diese Lösemittel haben ein sehr hohes Lösevermögen für organische Polymere, selbst für extrem schwerlösliche, wie z.B. für vollaromatische Polyamide und es war daher zu erwarten, daß die für Elektrodialyse üblicherweise eingesetzten Ionenaustauschermembranen auf der Basis organisch-polymerer Substanzen von diesen hochaktiven Lösemitteln angegriffen würden.

Überraschenderweise wurde nun gefunden, daß diese herkömmlichen Ionenaustauschermembranen auch in Gegenwart hoher Konzentrationen dieser hochaktiven Polymerlösemittel eingesetzt werden können.

Allerdings hat es sich gezeigt, daß bei normaler Durchführung der Entsalzung z.B. von Spinnbädern, die ca. 10 bis 80 % der Lösemittel z.B. Tetramethylharnstoff, Dimethylacetamid oder N-Methylpyrrolidon und 0,1 bis 5 % Metallsalze, insbesondere Calciumsalze enthalten, die Dialyse bereits nach relativ kurzer Zeit zum Erliegen kommt. Dies ist als eine gravierende Beschränkung der Einsatzmöglichkeit dieses Verfahrens zu betrachten, da gerade die wichtigsten Polymersubstanzen aus Lösungen ersponnen werden, die erhebliche Mengen dieser Salze enthalten, und die sich daher später in den Spinnfällbädern wiederfinden.

Es wurde nun weiterhin gefunden, daß sich dieser Nachteil des Elektrodialyseverfahrens überwinden läßt, wenn man als Spülmittel für die Elektroden wäßrige Elektrolytlösungen einsetzt, die frei sind von Sulfationen.

Die vorliegende Erfindung betrifft somit ein Verfahren zur Entsalzung von metallsalzhaltigen Mischungen aus Wasser und wasserlöslichen, hochaktiven, organischen Lösemitteln durch Elektrodialyse unter Verwendung üblicher Ionenaustauschermembranen auf Basis organischer Polymerer wobei in einer bevorzugten Ausführungsform die Spülung der Elektroden mit einer wäßrigen sulfationenfreien Elektrolytlösung erfolgt.

Das Verfahren eignet sich für die Entsalzung von Mischungen aus Wasser und organischen Lösemitteln, die bis zu 80 Gew.-% des Lösemittels und bis zu 10 Gew.-% wasserlösliche Metallsalze enthalten. Das Verfahren ist daher besonders gut geeignet zur Entsalzung von Spinnfällbädern als Vorbereitung für deren destillative Aufarbeitung.

In einer bevorzugten Ausführungsform des erfindungsgemäßen Verfahrens wird als Elektrodenspüllösung eine Lösung eines Alkalisalzes einer niederen organischen Carbonsäure eingesetzt. Als Alkalisalze niederer Carbonsäuren kommen insbesondere Alkalisalze von gesättigten, aliphatischen Monocarbonsäuren mit 1 bis 8, vorzugsweise 1 bis 3 C-Atomen, insbesondere mit 1 bis 2 C-Atomen in Betracht. Bevorzugte Alkalisalze sind die Natrium- und Kaliumsalze. In einer besonders bevorzugten Ausführungsform des erfindungsgemäßen Verfahrens wird als Elektrodenspüllösung Natriumacetatlösung eingesetzt.

Die Elektrolytkonzentration in der Elektrodenspüllösung ist in der Regel 0,1 bis 1 normal, d.h. die Lösungen enthalten pro Liter 0,1 bis 1 g-Äquivalent des Elektrolyten.

Das erfindungsgemäße Verfahren wird vorzugsweise bei 10 bis 40°C, besser noch bei 20 bis 30°C durchgeführt. Die Stromdichte wird dabei zwischen 1 und 200 A/m², vorzugsweise zwischen 50 bis 150 A/m² eingestellt.

Für das erfindungsgemäße Verfahren werden die handelsüblichen Ionenaustauschermembranen eingesetzt. Diese Membranen bestehen aus organischen Polymeren, die ionenaktive Seitenketten aufweisen. Kationenaustauschermembranen enthalten Sulfo- oder Carboxylgruppen in der Polymermatrix, Anionenaustauschermembranen weisen tertiäre oder quartäre Aminogruppen als Substituenten des polymeren Grundmaterials auf. Besonders geeignet als polymeres Grundmaterial für die Ionenaustauschermembranen sind Copolymerisate von Styrol und Divinylbenzol. Vorzugsweise werden Ionenaustauschermembranen mit einer Kapazität von 0,8 bis 3, vorzugsweise 1,2 bis 3,2 Milliäquivalente pro g eingesetzt.

Weiterhin ist es bevorzugt auch die Konzentratkammern mit einer Elektrolytlösung zu füllen, die frei ist von Sulfationen und vorteilhafterweise den Spezifikationen entspricht, die oben für die Elektroden-Spüllösung angegeben wurden.

Mit dem erfindungsgemäßen Verfahren können lösemittelhaltige, wäßrige Elektrolyten entsalzt werden, die bis zu 80 Gew.-%, in der Regel 10 bis 60 Gew.-% des organischen Lösungsmittels enthalten. In der Regel werden technisch anfallende Lösungen entsalzt, die zwischen 20 und 40 Gew.-% des organischen Lösungsmittels enthalten. Die in diesen Lösungen enthaltenen organischen Lösungsmittel können auch hochaktive Polymerlösemittel sein, wie z.B. Tetramethylharnstoff, Dimethylacetamid oder N-Methylpyrrolidon. Das Verfahren eignet sich auch zur Abtrennung von Chloriden, Fluoriden, Bromiden oder Acetaten der Alkali- oder Erdalkalimetalle.

Die folgenden Ausführungsbeispiele veranschaulichen die Durchführung des erfindungsgemäßen Verfahrens.

### Beispiel 1

Ein wäßriges Spinnfällbad mit einem Gehalt von 40 Gew.-% N-Methylpyrrolidon und 0,8 Gew.-% CaCl₂ wurde in einer Labor-Elektrodialyseapparatur vom Typ Berghof BEL 2 mit einer Membranfläche von 296 cm² bei einer Spannung von 12 V elektrodialysiert.

Als Elektrodenspülflüssigkeit wurde eine 4 gew.-%ige Natriumacetatlösung eingesetzt. Die Anfangsstromdichte betrug dabei 120 A/m². Der Dialyseprozeß wurde so lange fortgesetzt bis der Calciumchlorid-Restgehalt auf 0,01 Gew.-% gesunken war.

Die resultierende Entsalzungsleistung betrug 70 g CaCl₂ pro m² Membranfläche und Stunde; der elektrische Arbeitsbedarf 1,8 kWh pro kg abgetrenntes Calciumchlorid.

### Beispiel 2

In der in Beispiel 1 eingesetzten Apparatur und unter Benutzung der dort bereits verwendeten Membranen wurde ein wäßriges Spinnfällbad mit einem Gehalt von 32 Gew.-% N-Methylpyrrolidon und 0,55 Gew.-% CaCl₂ mit einer Spannung von 12 V elektrodialysiert. Als Elektrodenspülflüssigkeit wurde eine 2 gew.-%ige Natriumacetatlösung eingesetzt. Die Anfangsstromdichte betrug dabei 100 A/m². Der Dialyseprozeß wurde so lange fortgesetzt bis der CaCl₂-Restgehalt auf 0,005 Gew.-% gesunken war.

Der NMP-Verlust in das Konzentrat betrug 0,5 %. Die resultierende Entsalzungsleistung lag bei 20 g CaCl₂/m² und h; der elektrische Arbeitsbedarf bei 2,35 kWh pro kg CaCl₂.

### Beispiel 3

Ein Dauerversuch, bei dem die in Beispiel 2 beschriebene Operation ständig wiederholt wurde, ergab nach 200 Betriebsstunden eine lediglich durch geringfügiges "Membranfouling" verursachte Leistungsabnahme. Durch Regeneration mit 1 %iger Salzsäure konnte die volle Leistung der Membranen wieder hergestellt werden.

### Beispiel 4

Ein wäßriges Spinnfällbad mit einem Gehalt von 26 Gew.-% N-Methylpyrrolidon und 0,5 Gew.-% CaCl₂ wurde unter Einsatz der in Beispiel 2 eingesetzten Apparatur mit einer Gesamtmembranfläche von 296 cm² und bei einer Spannung von 12 V elektrodialysiert. Als Elektrodenspülflüssigkeit wurde eine 2 gew.-%ige Natriumacetatlösung eingesetzt. Die Anfangsstromdichte betrug 90 A/m². Der Dialyseprozeß wurde so lange fortgesetzt bis der CaCl₂-Restgehalt auf 0,002 Gew.-% gesunken war.

Die NMP-Ausbeute im Diluat betrug 99,6 %, die resultierende Entsalzungsleistung 18 g CaCl₂/m² Membranfläche und Stunde, der elektrische Arbeitsbedarf 1,8 kWh/kg CaCl₂.

In gleicher Weise wie in den Beispielen 1 bis 4 beschrieben können auch Spinnfällbäder entsalzt werden, die anstelle von N-Methylpyrrolidon andere hochaktive Polymerlösemittel wie z.B. Dimethylformamid, Dimethylacetamid, Hexamethylphosphortriamid oder Tetramethylharnstoff enthalten. Es werden dabei in etwa die gleichen Entsalzungsleistungen erreicht wie in den obigen Beispielen. Die nach der Elektrodialyse erhaltenen entsalzten Lösungen können direkt der destillativen Aufarbeitung zugeführt werden.

### Vergleichsversuch

Analog Beispiel 1 wurde ein wäßriges Spinnfällbad mit einem Gehalt von 27 Gew.-% N-Methylpyrrolidon und 0,55 Gew.-% Calciumchlorid in einer Labor-Elektrodialyseapparatur vom Typ Berghof BEL 2 mit einer Membranfläche von 296 cm² bei einer Spannung von 12 V elektrodialysiert.

Als Elektrodenspülflüssigkeit wurde eine 4 gew.-%ige Natriumsulfatlösung eingesetzt.

Nach wenigen Stunden ging der Stromfluß stark zurück und es wurde kein weiterer Ionentransport mehr beobachtet. Der Versuch mußte abgebrochen und der Membranstapel demontiert werden. Dabei zeigte sich, daß sich jeweils an der Elektrodenseite der äußeren Ionentauschermembranen eine feste Salzverkrustung gebildet hatte.

## Patentansprüche

1. Verfahren zum Entsalzen von metallsalzhaltigen Mischungen aus Wasser und wasserlöslichen hochaktiven zur Herstellung aliphatischer/aromatischer Polyamid - und Polyimid fasern geeigneten organischen Lösemitteln, dadurch gekennzeichnet, daß die Mischungen der Elektrodialyse unterworfen werden, unter Einsatz von Ionenaustauschermembranen aus organischen Polymeren, die ionenaktive Seitenkellen aufweisen.

2. Verfahren gemäß Anspruch 1, dadurch gekennzeichnet, daß die Spülung der Elektroden mit einer sulfationenfreien Elektrolytlösung erfolgt.

3. Verfahren gemäß mindestens einem der Ansprüche 1 und 2, dadurch gekennzeichnet, daß Ionenaustauschermembranen auf der Basis von Copolymerisaten von Styrol und Divinylbenzol eingesetzt werden.

4. Verfahren gemäß mindestens einem der Ansprüche 1 bis 3, dadurch gekennzeichnet, daß Ionenaustauschermembranen mit einer Kapazität von 0,8 bis 3, vorzugsweise 1,2 bis 2,2 Milliäquivalente pro g eingesetzt werden.

5. Verfahren gemäß mindestens einem der Ansprüche 1 bis 4, dadurch gekennzeichnet, daß das Verfahren bei 10 bis 40°C ausgeführt wird.

6. Verfahren gemäß mindestens einem der Ansprüche 1 bis 5, dadurch gekennzeichnet, daß mit einer Stromdichte von 1 bis 200 A/m² gearbeitet wird.

7. Verfahren gemäß mindestens einem der Ansprüche 1 bis 6, dadurch gekennzeichnet, daß als Elektrodenspüllösung eine wäßrige Lösung eines Alkalisalzes einer niederen organischen Carbonsäure eingesetzt wird.

8. Verfahren gemäß mindestens einem der Ansprüche 1 bis 7, dadurch gekennzeichnet, daß als Elektrodenspüllösung eine wäßrige Natriumacetatlösung eingesetzt wird.

9. Anwendung des Verfahrens des Anspruchs 1 zur Entsalzung von metallsalzhaltigen Mischungen aus Wasser und hochaktiven zur Herstellung aliphatischer/aromatischer Polyimid - und Polyimid fasern geeigneten organischen Lösemitteln, die bis zu 80 Gew.-% Lösemittel und bis zu 10 Gew.-% Salze enthalten.

10. Anwendung des Verfahrens des Anspruchs 1 zur Entsalzung von Spinnfällbädern.

## Claims

1. A process for desalting mixtures, which contain metal salts, of water and water-soluble highly active organic solvents which are suitable for preparing aliphatic/aromatic polyamide fibers and polyimide fibers, which comprises subjecting the mixtures to electrodialysis employing ion exchanger membranes composed of organic polymers which have ionically active side chains.

2. The process as claimed in claim 1, wherein the electrodes are washed with an electrolyte solution which is free of sulfate ions.

3. The process as claimed in at least one of claims 1 and 2, wherein ion exchanger membranes based on copolymers of styrene and divinylbenzene are employed.

4. The process as claimed in at least one of claims 1 to 3, wherein ion exchanger membranes with a capacity of 0.8 to 3, preferably 1.2 to 2.2, milliequivalents per g are employed.

5. The process as claimed in at least one of claims 1 to 4, wherein the process is carried out at 10 to 40°C.

6. The process as claimed in at least one of claims 1 to 5, wherein a current density of 1 to 200 A/m² is used.

7. The process as claimed in at least one of claims 1 to 6, wherein an aqueous solution of an alkali metal salt of a lower organic carboxylic acid is employed as electrode washing solution.

8. The process as claimed in at least one of claims 1 to 7, wherein an aqueous sodium acetate solution is employed as electrode washing solution.

9. The use of the process of claim 1 for desalting mixtures, which contain metal salts, of water and highly active organic solvents which are suitable for preparing aliphatic/aromatic polyamide fibers and polyimide fibers, which contain up to 80% by weight solvent and up to 10% by weight salts.

10. The use of the process of claim 1 for desalting coagulating spin baths.

## Revendications

1. Procédé pour déminéraliser des mélanges contenant des sels minéraux, constitués d'eau et de solvants organiques à haute activité, convenant à la fabrication de fibres de polyamide et de polyimide aliphatiques/aromatiques, caractérisé en ce que les mélanges sont soumis à l'électrodialyse avec utilisation de membranes échangeuses d'ions constituées de polymères organiques comportant des chaînes latérales à activité ionique.

2. Procédé selon la revendication 1, caractérisé en ce que les électrodes sont rincées avec une solution d'électrolytes sans ions sulfate.

3. Procédé selon au moins l'une des revendications 1 et 2, caractérisé en ce qu'on utilise des membranes échangeuses d'ions à base de copolymères du styrène et du divinylbenzène.

4. Procédé selon au moins l'une des revendications 1 à 3, caractérisé en ce qu'on utilise des membranes échangeuses d'ions ayant une capacité de 0,8 à 3 et de préférence de 1,2 à 2,2 milliéquivalents par g.

5. Procédé selon au moins l'une des revendications 1 à 4, caractérisé en ce que le procédé est mis en oeuvre à une température de 10 à 40°C.

6. Procédé selon au moins l'une des revendications 1 à 5, caractérisé en ce qu'on travaille avec une densité de courant de 1 à 200 A/m².

7. Procédé selon au moins l'une des revendications 1 à 6, caractérisé en ce qu'on utilise comme solution de rinçage des électrodes une solution aqueuse d'un sel alcalin d'un acide carboxylique organique inférieur.

8. Procédé selon au moins l'une des revendications 1 à 7, caractérisé en ce qu'on utilise comme solution de rinçage des électrodes une solution aqueuse d'acétate de sodium.

9. Utilisation du procédé selon la revendication 1 pour déminéraliser des mélanges contenant des sels métalliques, constitués d'eau et de solvants organiques à haute activité, convenant à la fabrication de fibres de polyamide et de polyimide aliphatiques/aromatiques, qui contiennent jusqu'à 80 % en poids de solvant et jusqu'à 10 % en poids de sels.

10. Utilisation du procédé selon la revendication 1 pour déminéraliser des bains de précipitation de filage.
